Europäisches Patentamt

European Patent Office

Office européen des brevets

(11) Publication number: 0 223 144
A1

# (12) EUROPEAN PATENT APPLICATION

(21) Application number: 86115207.2

(22) Date of filing: 03.11.86

(51) Int. Cl.⁴: **B65G 49/06** , **C03B 33/02**

(30) Priority: 22.11.85 IT 5406885 U

(43) Date of publication of application:
27.05.87 Bulletin 87/22

(84) Designated Contracting States:
AT CH DE ES FR GB LI NL

(71) Applicant: **BOTTERO S.p.A.**
**Roata Canale Via Genova, 82**
**I-12010 Cuneo(IT)**

(72) Inventor: **Ghinamo, Leonardo**
**Via Cuneo, 37**
**I-12012 Boves(IT)**

(74) Representative: **Prato, Roberto et al**
**c/o Ingg. Carlo e Mario Torta Via Viotti 9**
**I-10121 Torino(IT)**

(54) **A device for effecting conveyance of flat glass sheets.**

(57) The device (1) essentially comprises a bridge - (6) translatable parallel to its longitudinal axis and at least one actuator (13,51) supported by the said bridge (6) and operable to control a respective member (14) provided with a sucker operable to adhere to the sheet (2) deposited on a first table (3) to draw the sheet itself towards a second table (4) on which it is deposited following a dis-engagement of the said member (14).

Fig.1

EP 0 223 144 A1

# A device for effecting conveyance of flat glass sheets

The present invention relates to a device for effecting conveyance of flat sheets of glass, for example from a loading table to a cutting table.

As is known, conveyance of glass sheets along a system in which cutting and snapping of these takes place is effected by means of conveyor belts or by manual manipulation by operators. By utilising conveyor belts the whole system is made complex in that the cutting table must include a frame incorporating belts of retractable type. Manually effected conveyance by operators is of high cost in that it requires the use of personnel. Moreover, such systems have a reduced productive capacity which raises the overall costs.

The object of the present invention is that of providing a device able to convey flat sheets of glass, which will be free from the stated disadvantages.

According to the present invention there is provided a device for conveying flat sheets of glass from a first table to a second table both having a plurality of first holes upwardly from which flows a pre-determined quantity of air in such a way as to form an "air cushion" able to support the said sheet, characterised by the fact that it comprises: a bridge translatable perpendicularly of its longitudinal axis and above the said first table and second table; and at least one actuator supported by the said bridge and operable to control the movement of at least one member of the sucker type able to adhere to the said sheet deposited on the said first table to maintain this latter raised and then to move it during translation of the said bridge towards the said second table where, following disengagement of the said sucker member from the said sheet, this latter is deposited.

For a better understanding of the present invention a preferred embodiment is now described purely by way of non-limitative example and with reference to the attached drawings, in which:

Figure 1 is a perspective view of a device formed according to the present invention; and

Figures 2 and 3 are partially sectioned views of a detail of the device of Figure 1 formed in a different manner.

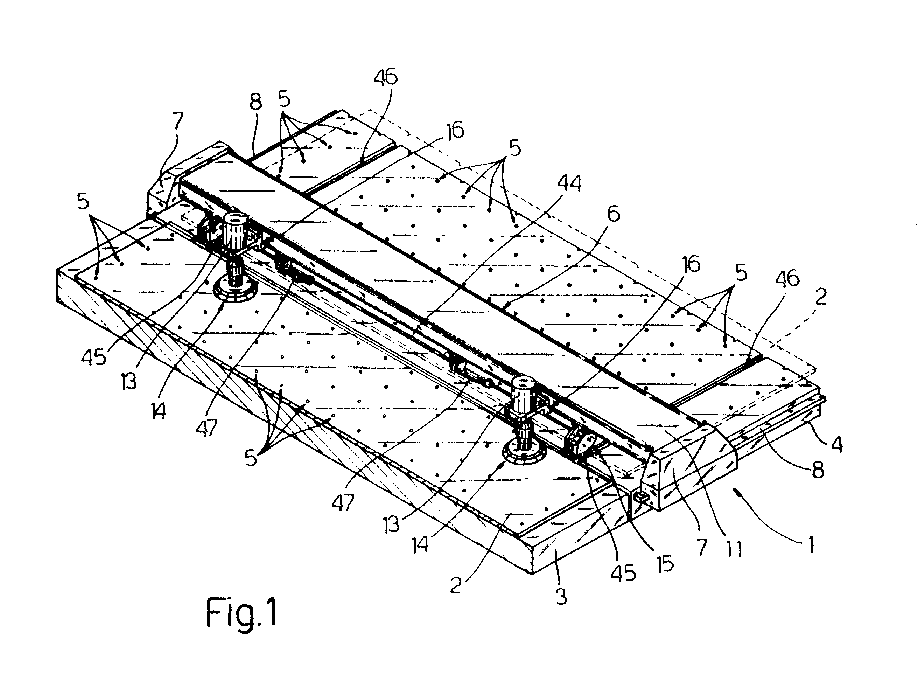

As illustrated in Figure 1 a device operable to convey a flat glass sheet 2 from a first table 3 to a second table 4, for example from a loading table to a sheet cutting table, is generally indicated with the reference numeral 1. Both the tables 3 and 4 have a plurality of holes 5 connected to a compressor and through which a quantity of air is expelled upwardly in such a way as to form a so-called "air cushion" which supports the sheet 2.

The device 1 includes a bridge 6 translatable orthogonally of its longitudinal axis by means of known type not illustrated. The bridge 6 is an internally hollow section and has a cross-section of inverted L-shape having, in particular, a first portion 11 from which a second portion 12 extends downwardly. Moreover, the longitudinal ends of the bridge 6 are rigidly connected to two supports 7 slidable along respective guides 8 formed along the lateral edges of the table 4.

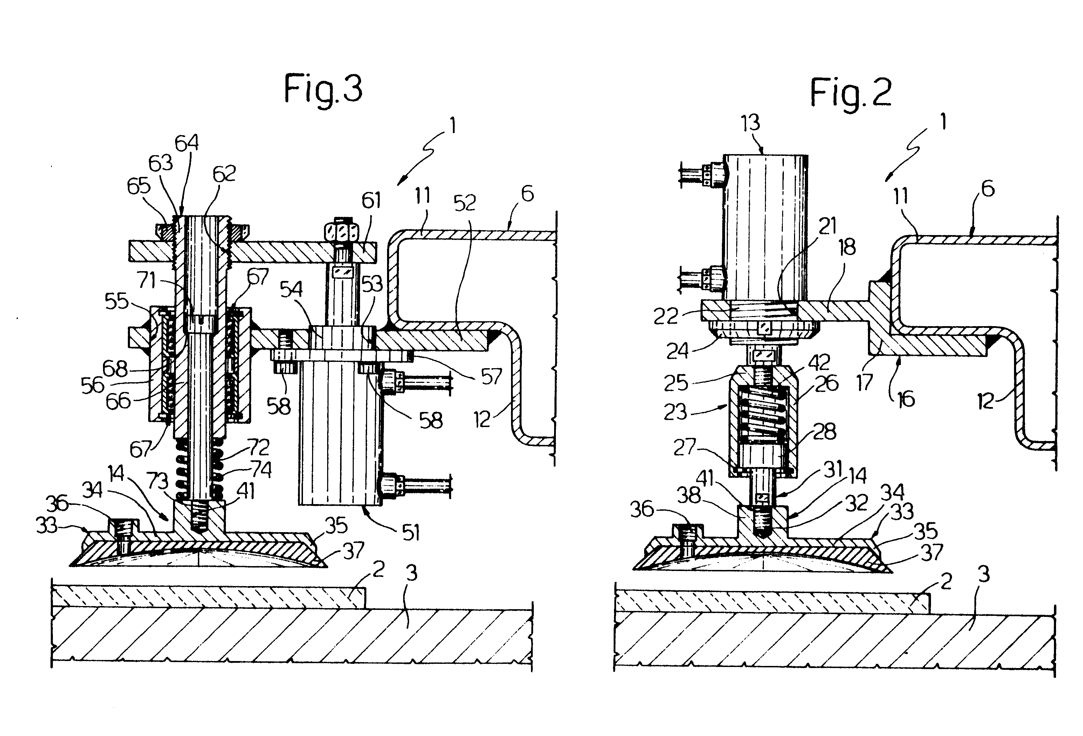

With reference to Figures 1 and 2, the bridge 6 supports two actuators 13 operable to control a respective member 14 of the sucker type which, in use, takes the sheet 2 and moves it along during translation of the bridge 6. That is to say, the members 14 are able to take up the sheet 2 from the table 3 and to deposit it on the table 4 where, in a subsequent stage, a second member 15, again supported by the bridge 6, can guide it towards a third table not illustrated.

The bridge 6 supports a bracket 16 including an L-shape portion 17 fixed to the portion 11 by welding. From the portion 17, parallel to the table 3, extends a plate 18 having a threaded through hole 21 the axis of which is orthogonal to the table 3. In the hole 21 is screwed a threaded portion 22 of the actuator 13 the movable part of which extends downwardly beyond the hole 21 and supports an inverted cup-shape element 23. It is to be noted that the plate 18 supports the actuator 13 and for this there is screwed a clamping ring nut 24 on the section of the portion 22 extending downwardly beyond the hole 21.

The element 23 has a base wall 25 and a cylindrical side wall 26. Within the element 23 is supported the head 28 of a pin 31 having a threaded lower end 32 outside the element 23 itself, by means of a washer 27 the lateral edge of which engages a groove formed in the wall 26.

The member 14 has a body 33 having a circular plate 34 parallel to the table 3 with a circular edge 35 folded downwardly in such a way as to be shaped like an inverted cup. Within the plate 34 there is fixed a sucker 37; the opposite surfaces of the sucker 37 and the plate 34 are put into communication via a through hole 36 which, in the part formed in the plate 34, is threaded. In use, through the hole 36 air is pumped or sucked in such a way as to cause a separation or an adhesion of the sucker 37 to the surface on which it rests which, in a specific case, is that of the sheet 2.

Upwardly from the upper surface of the plate 34 extends a central cylindrical element 38 having a threaded blind axial hole 41 into which is screwed the lower end 32 of the pin 31. Between the head 28 of the pin 31 and the base wall 25 of the element 23 there is interposed a cylindrical spring 42.

In use, the movable part of the actuator 13 can assume a first position in which it is entirely retracted so that the sucker 37 is spaced from the sheet 2 and a second position in which it is entirely extended so that the sucker 37 is pressed by the element 23 towards the sheet 2 and, simultaneously, via the through hole 36, air is sucked from the space delimited by the facing surfaces of the sucker 37 and the sheet 2 for the purpose of ensuring a good adhesion of the sucker 37 to the sheet 2 itself. In such conditions the spring 42 essentially performs the function of a shock absorber. When the sucker 37 adheres to the sheet 2 translation of the bridge 6 permits this to be drawn from the table 3 to the table 4. Simultaneously with this movement the bridge 6, via the member 15, presses the sheet 2 previously deposited on the table 4 towards a third table. Once the sheet 2 is deposited on the table 4 the bridge 6 returns to the original position for a new conveying cycle. Naturally, once the sheet 2 has been deposited, the actuator 13 returns its sucker 37 by disengaging it from the sheet 2 itself, obviously after having removed the said depression by sending air through the through hole 36.

As illustrated in Figure 1, the member 15 comprises a bar 44 to the longitudinal ends of which is fitted a respective arm 45; a lower end of this latter is able to slide internally or externally of a groove 46 formed along the table 4 close to its lateral edges. The longitudinal axis of the bar 44 is parallel to that of the bridge 6 and the longitudinal axes of the grooves 46 are parallel to the direction of translation of the bridge 6. This latter supports two actuators 47 having a retracted position in which the lower ends of the arms 45 are within the groove 46 and therefore engage along the lateral edge of the sheet 2 in order to displace it during translation of the bridge 6 towards the third table, and an extended position in which the bar 44 and the arms 45 are turned in an anti-clockwise sense to cause removal of their lower ends from the grooves 46. The arms 45 assume this position when the bridge 6 returns to its original position, that is to say when a new sheet 2 is deposited on the table 4.

With reference to Figure 3 an actuator similar to the actuator 13 is indicated with the reference numeral 51, and this too is operable to control the member 14. The actuator 51 is supported by a bracket 52 fixed by welding to the portion 11 of the bridge 6. The bracket 52 is parallel to the table 3 and has a first through hole 53 engaged by a portion 54 of the fixed part of the actuator 51 and a second through hole 55 engaged by a fixed sleeve 56. The actuator 51 has a flange 57 fixed by means of bolts 58 to the bracket 52. The actuator 51 is different from the actuator 13 in that its movable part is disposed above the fixed part; in other words, the movable part extends upwardly beyond the hole 53. The upper end of the movable part of the actuator 51 is fixed to a plate 61 parallel to the bracket 52. The plate 61 has a threaded through hole 62 in which is screwed an upper threaded portion 63 of an internally hollow cylinder 64. On the part of the portion 63 extending upwardly beyond the hole 62 is screwed locking ring nut 65.

The plate 61 can translate parallel to itself controlled by the movable part of the actuator 51. Translation of the plate 61 causes axial translation of the cylinder 64 a second portion 66 of which is housed, with the interposition of two axial bearings 67, within the sleeve 56. Inside the cylinder 64 there is formed a shoulder 68 to support a head 71 of a pin 72 having a lower end 73 outside the cylinder 64 and screwed into the hole 41 of the cylinder 35. Between this and the lower end of the cylinder 64 a cylindrical spring 74 is wound on the pin 72, having the same function as the spring 42 illustrated in Figure 2. In this respect it is to be noted that the member 14 illustrated in Figure 3 is entirely similar to that of Figure 2 and therefore its components are indicated with the same reference numerals. The movable part of the actuator 51 can assume a retracted position so that the sucker 37, being thrust by the pin 72 towards the sheet 2, comes into engagement with this, and an extended position in which the sucker 37 is disengaged from the sheet 2.

From what has been explained above the numerous advantages consequent on the device formed according to the present invention are evident.

In particular, with the device 1 a simultaneous movement of two adjacent sheets 2 is obtained by means of the engagement of the suckers 37 and by means of the thrust exerted by the arms 45 respectively. If the table 4 is that where incising of the sheet 2 takes place, simultaneous loading and unloading is obtained with the device 1, that is to say once incising has taken place, simultaneously with the discharge of the incised sheet 2 towards a third table, for example a snapping table, the table 4 is loaded with a new sheet 2 to be incised. All this allows the working times to be reduced and therefore a greater productive capacity of the system in which the device 1 is mounted to be obtained. With respect to currently utilised devices, there is also obtained a simplification of the mechanical part of the system and, above all, a unification of the loading, cutting and snapping tables, or the adjacent positioning of these without particular mechanical problems. It is to be seen, moreover, that on the cutting table there is no necessity for mechanical references for positioning the sheet 2 in that this positioning is obtained with high precision by the position of the suckers 37 and the translation of the bridge 6. Finally, it is to be noted that with the use of the device 1 the number of operators required by the system is reduced, which, together with the above-listed advantages, contributes to the reduction in the costs of production.

Finally, it is clear that the device 1 described and illustrated here can have modifications and variations introduced thereto without by this departing from the present invention.

## Claims

1. A device for conveying flat sheets of glass (2) from a first table (3) to a second table (4) both having a plurality of first holes (5) upwardly from which flows a pre-determined quantity of air in such a way as to form an "air cushion" to support the said sheet (2), characterised by the fact that it comprises:
a bridge (6) translatable perpendicularly of its longitudinal axis above the said first table (3) and second table (4); and
at least one actuator (13,51) supported by the said bridge 6 and operable to control translation of at least one sucker-type member (14) operable to adhere to the said sheet (2) deposited on the said first table (3) to maintain this latter raised and to move it during translation of the said bridge (6) towards the said second table (4) where, following disengagement of the said sucker member (14) from the said sheet (2), this latter is deposited.

2. A device according to Claim 1, characterised by the fact that the said sucker member (14) comprises a first inverted cup-shape body (33) within which is fixed a sucker (37); the said first body (13) being rigidly connected with the lower end (32,73) of a pin (31,72) translatable, essentially by the action of the movable part of the said first actuator (13,51) between a first position in which the said sucker (37) is raised from the said sheet (2), and a second position in which the said sucker (37) adheres to the said sheet (2).

3. A device according to Claim 2, characterised by the fact that the said brid9e (6) supports a bracket (16) to which the fixed wall of the said actuator (13) is rigidly connected, the movable parts of which extend downwardly and support a second body (23) of inverted cup-shape form and within which is housed a head (28) of the said pin (31); between the said head (28) and the base wall (25) of the said second body (23) there being interposed a spring (42).

4. A device according to Claim 3, characterised by the fact that a fixed part of the said actuator (51) is rigidly connected to the said bracket (52), the movable part of the actuator (51) extending upwardly and being rigidly connected to an internally hollow cylinder (64) housing the said pins (72). The said bracket (52) having a second through hole (55) engaged by a fixed sleeve (56) along which, with the interposition of at least one axial bearing (67), axially slides the said cylinder (64) against the resilient action exerted by a spring (74).

5. A device according to any preceding Claim, characterised by the fact that it includes an auxiliary member (15) operable to thrust the said sheet (2), deposited on the said second table (4) by the said member (14) towards a third table.

6. A device according to Claim 5, characterised by the fact that the said auxiliary member 15 comprises:
two arms (45) actuated by respective control means and operable to come into contact with their lower ends with a lateral edge of the said sheet (2) deposited on the said second table (4) in such a way that, during translation of the said bridge (6) they also cause translation of the said sheet (2) towards the said third table;
two grooves (46) formed in the said second table (4) and able to house the lower ends of the said arms (45); and
means (44) and (47) operable to introduce and retract the lower ends of the said arms (45) to and from the said grooves (46).

7. A device according to Claim 6, characterised by the fact that the said control means comprise a bar (44) on which are fitted upper portions of the said arms (45) and at least one auxiliary actuator (47) supported by the said bridge (6) and operable, with its movable part, to cause the said bar (44), and, via this the said arms, (45) to rotate.

8. A device according to any preceding Claim, characterised by the fact that the said bridge (6) has its longitudinal ends connected to respective supports (7) slidable along respective guides (8) formed along the lateral edges of the said second table (4).

Fig.1

Fig.3

Fig.2

0 223 144

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-U-8 520 228 (MAWAK WARENHANDELSGESELLSCHAFT MBH) * Whole document * | 1-3,8 | B 65 G 49/06 C 03 B 33/02 |
| P,X | EP-A-0 192 920 (MAWAK WARENHANDELSGESELLSCHAFT mbH) * The whole document * | 1,2,3, 8 | |
| X | GB-A-1 090 323 (LIBBEY-OWENS-FORD GLASS CO.) * Whole document * | 1,2 | |
| A | GB-A-1 187 496 (THE TSUBAKIMOTO CHAIN Mfg. CO.) * Figures 4-8 * | 1 | |
| A | FR-A-2 302 974 (PILKINGTON BROTHERS) * Whole document * | 1 | TECHNICAL FIELDS SEARCHED (Int. Cl.4) B 65 G 49/06 C 03 B 33/00 |

The present search report has been drawn up for all claims

| Place of search | Date of completion of the search | Examiner |
|---|---|---|
| THE HAGUE | 21-01-1987 | VAN DEN BOSSCHE W.L. |